(19) Europäisches Patentamt
European Patent Office
Office européen des brevets

(11) **EP 1 272 908 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(51) Int Cl.:
***G05B 19/23*** *(2006.01)*

(21) Anmeldenummer: **01921234.9**

(22) Anmeldetag: **23.03.2001**

(86) Internationale Anmeldenummer:
**PCT/DE2001/001121**

(87) Internationale Veröffentlichungsnummer:
**WO 2001/075536 (11.10.2001 Gazette 2001/41)**

(54) **VERFAHREN ZUR BESTIMMUNG DER RESTLAUFZEIT EINES ANTRIEBES**

METHOD FOR DETERMINING THE REMAINING TIME A DRIVE RUNS

PROCEDE PERMETTANT DE DETERMINER LE TEMPS PENDANT LEQUEL UN ENTRAINEMENT CONTINUE A TOURNER

(84) Benannte Vertragsstaaten:
**DE ES FR GB**

(30) Priorität: **30.03.2000 DE 10015856**

(43) Veröffentlichungstag der Anmeldung:
**08.01.2003 Patentblatt 2003/02**

(73) Patentinhaber: **ROBERT BOSCH GMBH**
**70442 Stuttgart (DE)**

(72) Erfinder: **KAHLES, Patric**
**77815 Buehl (DE)**

(74) Vertreter: **Hörschler, Wolfram Johannes**
**Isenbruck, Bösl, Hörschler, Wichmann, Huhn**
**Theodor-Heuss-Anlage 12**
**68165 Mannheim (DE)**

(56) Entgegenhaltungen:
**EP-A- 0 047 812**    **EP-A- 0 603 506**
**DE-A- 3 829 405**    **DE-A- 19 610 626**
**DE-C- 19 702 931**

## Beschreibung

Technisches Gebiet

Die Erfindung bezieht sich auf ein Verfahren zur Bestimmung der Restlaufzeit eines Antriebes bis zum Erreichen einer Endposition. Bei fremdkraftbetätigten Verstellsystemen, beispielsweise Fensterhebern oder Schiebedachbetätigungen in Kraftfahrzeugen, ist ein sicheres Schließen einer Fläche, beispielsweise einer Glasfläche, zu gewährleisten.

Stand der Technik

Zur Bewegung von Glasflächen in Kraftfahrzeugen, seien es Fenster, seien es Schiebedächer, werden im allgemeinen fremdkraftbetätigte Verstellsysteme, zum Beispiel Fensterheberantriebe eingesetzt. Mit diesen Antrieben soll ein sicheres Verschließen der Fensterflächen gewährleistet werden, um die Fahrgastzelle eines Kraftfahrzeuges gegen Diebstahl und Einbruch abzusichern. Das Fensterflächen enthaltende Schließsystem wird beim Schließen in seine mechanisch begrenzte Endlage gefahren. Als Abschaltkriterium dient meist eine Unterdrehzahl-Momente- oder Stromerkennung. Bei Fensterhebersystemen wird der Übergang Fensterscheibe zu Türrahmen durch eine entsprechende Dichtung abgeschlossen. Beim Eintauchen in die Dichtung nimmt üblicherweise die Reibung zu, so daß das Motormoment als Folge davon ansteigt. Bei solchen Fensterhebersystemen, die keine vorzeitige Abschaltung am oberen Anschlag enthalten, kann sich das Schließsystem in der oberen Dichtung verspannen.

Um ein sicheres Schließen zu gewährleisten, müssen die Grenzwerte der mechanischen Beanspruchung der jeweiligen Bauteile jedoch entsprechend hoch gewählt werden. Hohe mechanische Grenzwerte erlauben eine hohe mechanische Belastung der eingesetzten Bauteile, wie z.B. Fensterheber, Türenführungen; Motor etc. mit der Folge, dass deren Dimensionierung auf die auftretenden Grenzwerte abgestimmt ist und die sich daraus ergebende Abnützung als relativ hoch einzustufen ist.

Bei Fensterhebersystemen wird der obere Anschlag mit Schließkraftbegrenzung vorteilhafterweise als Referenzposition benutzt. Anhand der Referenzposition werden wichtige Daten wie beispielsweise Schutzbereichsgrenzen des Schließsystemes berechnet. Durch wiederholtes Anfahren des tatsächlichen oberen Anschlages wird diese Referenzposition ständig innerhalb bestimmter Toleranzen nachgeführt. Aufgetretene Veränderungen in der Systemmechanik werden auf diese Weise erfasst und berücksichtigt.

Aus EP-A 0 603 506 ist ein Verfahren zur Lagebestimmung eines elektromotorisch in zwei Richtungen angetriebenen Teils von Kraftfahrzeugen bekannt. Hierzu werden mit Hilfe eines Zählers beim Bewegen des Teils in seine beiden Richtungen Zählimpulse eines Stellungsgebers in den Zähler zum Verringern bzw. Erhöhen des Zählerstandes entsprechend der vorgegebenen Bewegung eingegeben. Nach Abschalten des Antriebsmotors werden die vom Stellungsgeber gelieferten Impulse in ihrem zeitlichen Abstand vom Abschaltzeitpunkt analysiert und einer Weiterbewegung des Zählers zugeordnet, wenn der zeitliche Abstand der Impulse ein vorgegebenes Maß nicht übersteigt.

Eine Anordnung zur Nachlauferfassung von elektrischen Stellmotoren mit inkrementeller Positionserfassung ist aus DE-C 197 02 931 bekannt. Hierbei werden Positionssignale von Positionsgebern festgestellt und die festgestellten Zustände der Positionssignale bzw. die Zustände des Positionsgebers nach Abschalten des Motors in einem nicht-flüchtigen Speicher abgespeichert.

DE-A 38 29 405 beschreibt eine Betätigungseinrichtung für elektromotorisch bewegbare Teile von Kraftfahrzeugen, die einen Sollwertgeber und einen digitalen Istwertgeber mit inkrementeller Istwerterfassung sowie einen Mikroprozessor zur Steuerung des Elektromotors umfasst. Bei der Betätigungseinrichtung ist zusätzlich zu dem inkrementelle Zählimpulse liefernden Istwertgeber noch ein Absolutwertgeber vorgesehen, der mit dem inkrementellen Istwertgeber durch Getriebeelemente verbunden ist und über den gesamten Verschiebeweg des zu bewegenden Teiles nur ein Signal oder Signalpaar abgibt, das einer bestimmten Position des bewegbaren Teiles zugeordnet ist.

Darstellung der Erfindung

Mit der erfindungsgemäßen Lösung einer von der Position der Schließflächen abhängigen Berechnung der Restlaufzeit eines Antriebes zum Erreichen der endgültigen Schließposition, lassen sich die mechanischen Belastungen des Schließsystems erheblich reduzieren. Beim Hochfahren von Fensterscheiben, beispielsweise in ihre schließenden Positionen an einer Kraftfahrzeugtüre oder dergleichen, kann eine Verspannung der Fensterfläche beispielsweise in der dieser zugeordneten Dichtung erfolgen. Dieser Verspannungszustand kann bis zum nächsten Ansteuerungsvorgang des elektrischen Antriebes andauern und unter Umständen durch starke Sonneneinstrahlung, dem das Schließsystem an einem Kraftfahrzeug ausgesetzt sein kann, noch verschärft werden. Mit der erfindungsgemäßen Lösung wird die Fensterscheibe beispielsweise in eine schließende Position bewegt, die diese systembedingte reale Veränderung des den Schließvorgang begrenzenden mechanischen Anschlages berücksichtigt, so daß die Restlaufzeit des elektrischen Fensterheberantriebes ab einer erfaßten Position genau an die Lage des gegenüberliegenden mechanischen Anschlages angepaßt werden kann, bevor an den mechanischen, die Kräfte übertragenden Komponenten zu große Momente und Druckkräfte wirksam werden. Mit der erfindungsgemäßen Lösung lassen sich die mechanisch bedingten Systemverspannungen signifikant reduzieren, auftretende Kräfte und Momente lassen sich erheblich herabsetzten, da die Schließposition früher erreicht wird. Damit einher geht eine erhebliche Erhöhung der Dauerlauffestigkeit, ferner lassen sich Lagerungen, Spindeln, die Bewegung übertragende mechanische Komponenten wesentlich leichter dimensionieren, da die Grenzwerte dank der intelligenten Antriebsabschaltung nunmehr erheblich geringer gewählt werden können.

Wird die erfindungsgemäße Lösung zur Bestimmung der Restlaufzeit an einem Fensterheberantrieb eines Kraftfahrzeuges eingesetzt, so läßt sich mit dieser eine Komforterhöhung für die Fahrzeuginsassen herbeiführen, da eine Geräuschverminderung beim Erreichen der Schließposition der jeweiligen Fenster- bzw. Schiebedachfläche erzielbar ist.

Durch das rechtzeitige Abschalten des elektrischen Antriebes läßt sich eine Erhöhung der thermischen Motorverfügbarkeit erzielen; durch das rechtzeitige Abschalten des elektrischen Antriebes läßt sich dessen zu starke Erwärmung durch zu hohe fließende Ströme wirksam ausschließen.

Dadurch, daß systembedingte Veränderungen, wie beispielsweise Witterungseinflüsse oder die Motorspannung am elektrischen Antrieb berücksichtigt werden, kann eine sich daraus ergebende Änderung der Eintauchtiefe durch sich ändernde reale Positionen des oberen Anschlages kompensiert werden. Bei nach oben wandernder realer Position des mechanischen Anschlages wird die Fensterscheibe aufgrund der kinetischen Energie des Fensterhebersystems nach Abschaltung des Antriebes über die alte Stop-Position hinausbewegt und erreicht so den aktuellen, tatsächlichen Anschlag.

Verschiebt sich der reale Anschlag andererseits nach unten, so wird die Position, an der die Messung ausgelöst wird nicht erreicht, und eine Abschaltung des elektrischen Antriebes aufgrund des Restlaufzeitprinzipes kann nicht erfolgen, sondern es wird eine Normierung durch Setzung eines Referenzpunktes erzwungen.

Zeichnung

Anhand der Zeichnung wird die Erfindung nachstehend detaillierter erläutert:

Es zeigt:

Fig. 1    eine Ablaufroutine zur zyklischen Ermittlung und Speicherung von Restlaufzeiten elektrischer Antriebe,

Fig. 2    eine Ablaufroutine zur Ermittlung eines definierten Nachlaufes,

Fig. 3    eine Säulengrafik mit Darstellung der Position der Fensterscheibe, an der die Restlaufzeit ermittelt wird sowie deren Ablauf.

Ausführungsvarianten

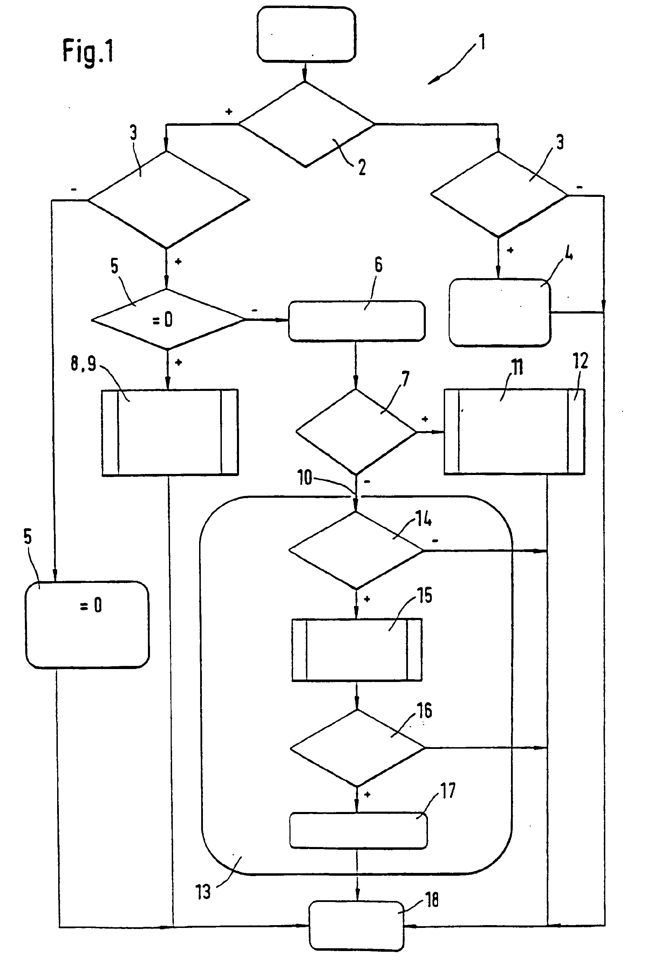

In der Darstellung gemäß Fig. 1 ist eine Ablaufroutine zur zyklischen Ermittlung Speicherung von Restlaufzeiten für elektrische Antriebe wiedergegeben.

In der mehrfachverzweigenden Ablaufroutine 1 zur zyklischen Ermittlung von Restlaufzeiten für elektrische Antriebe, beispielsweise für Fensterheber- oder Schiebedächer, erfolgt zunächst eine Abfrage 2, ob der Nachlaufbereich erreicht ist. Die Ablaufroutine 1 wird je nach freier Kapazität eines Mikroprozessors aufgerufen und abgearbeitet und kann optional ein Erweiterungsmodul 13 enthalten. Nach der Feststellung, ob die Position der Fensterscheibe im Nachlaufbereich noch innerhalb eines Nachlaufbereiches liegt, wird bei Bejahung dieser Frage in die Abfrage 3 zur Motoransteuerung verzweigt, wobei zusätzlich eine Abfrage über die Verfügbarkeit der Nachlaufauswertung erfolgt. Ist der Antrieb zur Bewegung der betreffenden zu schließenden Fläche inaktiv, und die Routine zur Nachlaufauswertung frei, erfolgt eine Verzweigung zum Nachlaufzähler 5, der auf den Wert 0 gesetzt und von dort aus anschließend zum Ende 18 der zyklischen Ablaufroutine 1 verzweigt, bis diese durch den Mikroprozessor oder den Mikrocontroller aufgerufen wird. Die Aufrufzyklen durch den Mikroprozessor sind von dessen kapazitätmäßiger Auslastung abhängig.

Wird an der Positionserkennung 2 der betreffenden Fenster oder Glasscheibe festgestellt, daß die aktuelle Position der betreffenden Fensterscheibe außerhalb des Nachlaufbereiches liegt, erfolgt eine Verzweigung zu einer zweiten Abfrage 3, zur , ob die Motoransteuerung "heben" aktiv ist. Wird dies dort verneint, erfolgt eine Verzweigung zum Ende 18 der Ablaufroutine 1, die durch den Mikrocontroller zyklisch abgearbeitet wird. Wird hingegen durch die Abfrage 3 festgestellt, daß der Antrieb zur Bewegung der Fensterscheibe in die Schließposition aktiv ist, wird in die Nachlaufauswertung 4 verzweigt, und der Nachlaufzähler auf 0 gesetzt. Von dort wird wieder an das Ende 18 der Ablaufroutine 1 verzweigt.

Nach der erstgenannten Abfrage 3 für die Motorsteuerung wird bei aktiver Motorsteuerung und freier Nachlaufauswertung der dieser nachgeordnete Nachlaufzähler 5 abgefragt, ob dessen Wert = 0 entspricht. Da die aktuelle Position der Fensterscheibe im Nachlaufbereich gemäß der Abfrage in der Positionserkennung 2 liegt, wird bei Bejahung der Abfrage auf den Wert 0 des Nachlaufzählers 5, die Nachlaufzeit des elektrischen Antriebes berechnet. Der errechnete Wert wird um 1 erhöht und in den Nachlaufzähler geladen. Nach Durchlaufen der Rechenroutine 8, 9 wird wieder zum Ende der zyklisch zu durchlaufenden Ablaufroutine 1 verzweigt.

Wird die Abfrage des Nachlaufzählers 5 auf Vorliegen des Wertes 0 hingegen verneint, wird der Nachlaufzähler 5 dekrementiert; in der Nachlaufzählersetzeinheit 7 wird der Nachlaufzähler auf den Wert 1 gesetzt. Es erfolgt eine Ansteuerung der Abschaltung des elektrischen Antriebes der zu schließenden Fensterfläche, beispielsweise einer Fensterscheibe oder eines Schiebedaches; ferner eine Sperrung der Nachlaufauswertung. Von dort erfolgt eine Verzweigung zum Ende der Ablaufroutine 1.

Von der Nachlaufzählersetzeinheit 7 kann bei Verneinung der Abfrage auf den Nachlaufzählerwert = 0 in ein Erweiterungsmodul 13 verzweigt werden. Dieses stellt eine optional verfügbare Auswertung dar und kann bei standardmäßger Konfiguration der Erkennungsroutine auch fortgelassen werden, und durch die Parameternachlaufkontrolle = 0 ausgeschaltet werden. Wird das Erweiterungsmodul 13 hingegen aktiviert, so wird durch eine Meßwertabfrage 14 abgefragt, ob ein neuer Meßwert vorliegt, welcher beispielsweise über einen Sensor rückermittelt werden kann. Liegt kein neuer Meßwert vor, wird an das Ende 18 der zyklischen Ablaufroutine 1 verzweigt. Ist hingegen ein neuer Meßwert vorhanden, wird innerhalb einer Rechenroutine 15 die Nachlaufkontrollzeit plus 1 berechnet. Im sich anschließenden Vergleicher 16 wird ermittelt, ob die Kontrollzeit die Nachlaufzeit überschreitet; falls nicht, wird an das Ende 18 der Ablauf der zyklisch zu durchlaufenden Ablaufroutine 1 verzweigt. Übersteigt die Kontrollzeit die Nachlaufzählerzeit, wird in einer Vorgabewerteinheit 17 der Nachlaufzähler auf eine Kontrollzeit gesetzt.

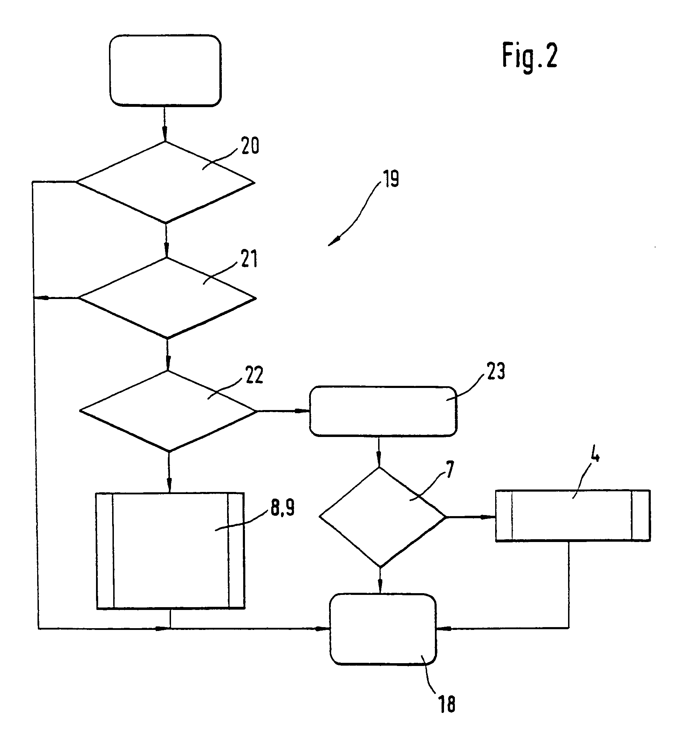

Fig. 2 zeigt eine Ablaufroutine für die definierte Ermittlung eines Nachlaufes.

Ausgehend von einem Startblock wird innerhalb einer Abfrageroutine 20 ermittelt, ob der Nachlaufbereich erreicht ist oder nicht; falls nicht, wird zum Ende der Ablaufroutine 19 für definierten Nachlauf verzweigt. Ist der Nachlaufbereich hingegen erreicht, erfolgt in einer sich anschließenden Motorzustandsabfrage 21, ob der elektrische Antriebsmotor eingeschaltet ist oder nicht. Falls nicht, wird zum Ende 18 der Routine 19 verzweigt. Innerhalb einer Abfrage 22 wird ermittelt, ob der Nachlaufzählerstand den Wert 0 hat. Falls ja, erfolgt in der Berechnungsroutine 8, 9 eine Berechnung der Nachlaufzeit; der ermittelte Wert wird um 1 erhöht und in den Nachlaufzähler 5 geladen. Von der Nachlaufzählerstandabfrage 22 erfolgt ein Abzweig zu einer Dekrementiereinheit 23, der den Nachlaufzähler 5 auf den Wert 1 setzt. Steht der Nachlaufzähler auf dem Wert 1, erfolgt eine Ansteuerung des elektrischen Antriebes für die zu beschließende Scheibe auf Stillsetzen und von dort eine Verzweigung ans Ende 18 der Ablaufroutine 19 für definierten Nachlauf.

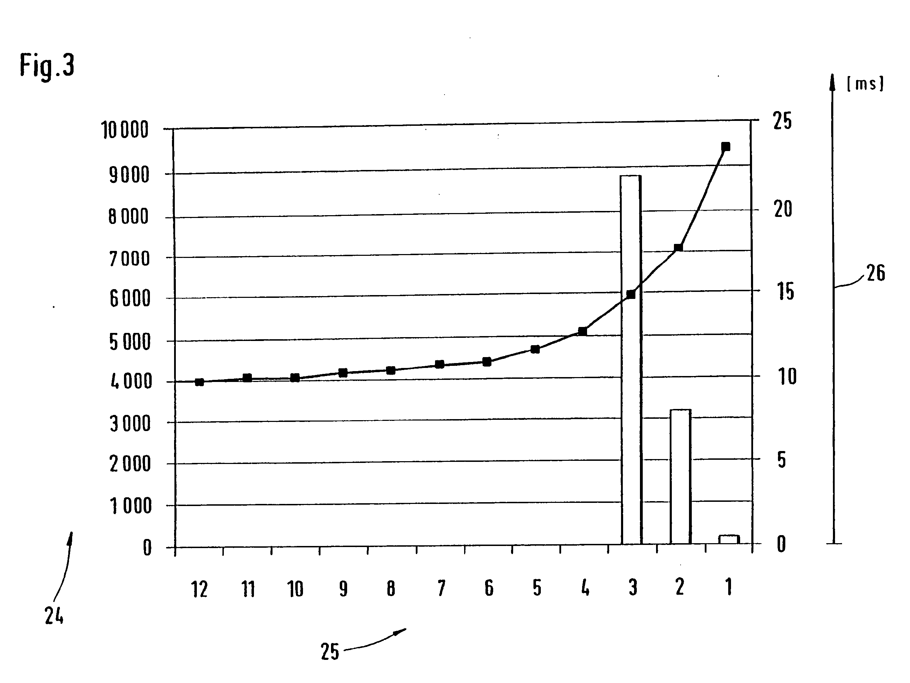

Fig. 3 zeigt eine Säulengrafik mit Darstellung der Position der zu schließenden Fensterscheibe, für deren Schließen die Restlaufzeit ermittelt wird.

Die Nachlaufzeit wird für die Position 3 aus der Beziehung

$$t_{Rest} = (2 - 0) \cdot t_{Delta}, \; 2 = \text{Meßposition}$$

bestimmt. Dabei repräsentiert die Position 2 die Meßposition und die Position 0 den oberen Anschlag. Im gezeigten Beispiel wird die Nachlaufzeit an der Position 3 berechnet, nach Ablauf des Zählers 5 an der Position 1 wird der elektrische Antriebsmotor gemäß Position 11 der Figuren 1 und 2 stillgesetzt. Damit wird eine Blockierung verhindert, der elektrische Antrieb kommt trotzdem an einer sicher geschlossenen Position der Fensterscheibe zu seinem Stillstand. Ist die Restlaufzeit, $t_{Rest}$ ermittelt, kann durch Multiplikation mit einem Zuschlagsfaktor die Nachlaufzeit $t_{nachlauf}$ ermittelt werden. Der Zuschlagsfaktor kann abhängig von der ermittelten Meßposition eingestellt werden. Eine empirische Ermittlung aus Referenzläufen ist ebenfalls möglich. Der jeweilige elektrische Antrieb wird nach Ablauf der so ermittelten Nachlaufzeit $t_{Nachlauf}$ stillgesetzt, wodurch eine Verspannung am oberen vorgegebenen mechanischen Anschlag der zu schließenden Fläche verhindert werden kann. Die Nachlaufzeit wird gemäß der Beziehung

$$t_{Nachlauf} = t_{Rest} \cdot \text{Zuschlagsfaktor}$$

bestimmt. Eine Variation der Meßposition macht eine Anpassung des Zuschlagsfaktors notwendig. Zur Verifikation der Position eines realen oberen Anschlages bzw. zum Ausgleich von mechanischen Systemungenauigkeiten, kann der jeweilige obere Anschlag zyklisch oder antizyklisch angefahren werden. Dabei kann der Motor beispielsweise bis zur Blockierung angesteuert werden, die eingenommene Position dann auf 0 gesetzt werden. Der jeweils vorzunehmende Zyklus kann mittels einer Kennlinie oder auch per Zufall ermittelt werden.

Aufgrund auf systembedingt auftretenden Veränderungen wie beispielsweise die Umgebungstemperaturen durch längere Sonnenstrahleinwirkung bzw. Motorspannungsänderungen am elektrischen Antriebsmotor, kann die Eintauchtiefe einer Fensterscheibe beispielsweise in eine Dichtung variieren. Die Eintauchtiefe steigt beispielsweise an, wenn der reale obere mechanische Anschlag sich verschiebt und zwar sich nach oben verschiebt. Aufgrund der kinetischen Energie des Fensterhebersystems wird die Fensterscheibe nach Abschaltung des elektrischen Antriebsmotors über die alte Stop-Position hinaus bewegt und bewegt sich in Richtung ihres tatsächlichen Anschlages. Im umgekehrten Fall, bei dem sich die Eintauchtiefe verringert, verschiebt sich der reale mechanische Anschlag nach unten. Die Meßposition (Position 2 in der Gleichung für $t_{Rest}$ wird nunmehr nicht erreicht, es erfolgt somit keine Abschaltung mittels des hier vorgestellten Restlaufzeitprinzipes, sondern es wird eine Normierung erzwungen.

Die Referenzpunktposition (Position 0 in der Gleichung für $t_{Restzeit}$) wird gesetzt. Beim nächsten Anfangen des oberen Blockes wird die Meßposition wieder erreicht, die Abschaltung des elektrischen Antriebsmotors kann nunmehr aufgrund der ermittelten Berechnung der jeweils notwendigen Restlaufzeit ermittelt werden, die zum Einnehmen einer schließenden Position dient.

Bezugszeichenliste

1. zyklische Ablaufroutine
2. Positionserkennung
3. Abfragemotoransteuerung
4. Nachlaufauswertung
5. Nachlaufzähler
6. Dekrementierer
7. Nachlaufzähler-Setzeinheit
8. Berechnungsroutine
9. Laderoutine
10. aktuelle Auswerteposition
11. Abschaltansteuerung Antrieb
12. Auswertesperrung
13. Erweiterungsmodul
14. Meßwertabfrage
15. Rechnerroutine Nachlauf- /Kontrollzeit
16. Vergleicher
17. Nachlaufsetzer
18. Ende
19. Ablaufroutine definierter Nachlauf
20. Bereichsabfrage
21. Motorzustandsabfrage
22. Nachlaufzählerstand
23. Dekrementierer
24. Pulsweite
25. Positionantrieb/Schließfläche
26. Nachlaufzeit

**Patentansprüche**

1. Verfahren zur Bestimmung der Restlaufzeit eines Antriebes bis zum Erreichen eines Anschlages, wobei sich mittels des Antriebes zu schließende Flächen in mechanisch Endlagen fahren lassen, **dadurch gekennzeichnet, daß** nach Erfassen der Position der zu schließenden Fläche relativ zu einem mechanischen Anschlag die Zeitdifferenz zwischen zwei Inkre-mentalgeberimpulsen (25) in der Nähe des mechanischen Anschlages ermittelt wird, und die verbleibende Restlaufzeit (26) des elektrischen Antriebes bis zum Erreichen des mechanischen Anschlags berechnet wird und nach Ablauf der berechneten Restlaufzeit (26) der Antriebsmotor des Schließsystemes stillgesetzt wird.

2. Verfahren nach Anspruch 1, **dadurch gekennzeichnet, daß** die tatsächliche Lage des mechanischen Anschlages aus einem oder mehreren Referenzläufen ermittelt wird.

3. Verfahren nach Anspruch 1, **dadurch gekennzeichnet, daß** das aus der Berechnung hervorgehende Ergebnis für die Restlaufzeit (26) mit einem von der aktuellen Meßposition abhängigen Zuschlagsfaktor verknüpft wird.

4. Verfahren nach Anspruch 3, **dadurch gekennzeichnet, daß** der Zuschlagsfaktor abhängig von systembedingten Einflußgrößen variiert wird.

5. Verfahren gemäß der Ansprüche 3 oder 4, **dadurch gekennzeichnet, daß** durch den Zuschlagsfaktor die Eintauchtiefe einer Schließfläche in eine diesen umfassenden mechanischen Anschlag angepaßt werden kann.

6. Verfahren gemäß Anspruch 5, **dadurch gekennzeichnet, daß** die Eintauchtiefe abhängig vom Systemparameter der Motorspannung des elektrischen Antriebes ist.

7. Verfahren gemäß einem oder mehreren der vorhergehenden Ansprüche, **dadurch gekennzeichnet, daß** nach der ersten Ermittlung der Restlaufzeit (26) bei jeder neuen Position (25) die entsprechende Restlaufzeit (26) ermittelt und zur Plausibilitätsbegründung herangezogen werden kann.

8. Verfahren gemäß Anspruch 3, **dadurch gekennzeichnet, daß** der Zuschlagsfaktor empirisch am Schließsystem oder bei Referenzläufen in den mechanischen Anschlag für die Schließfläche ermittelt wird.

**Claims**

1. Method for determining the remaining time a drive runs until a stop is reached, wherein faces which are to be closed by means of the drive can be moved into mechanical end positions, **characterized in that**, after the position of the face to be closed is determined relative to a mechanical stop, the difference in time between two incremental sensor pulses (25) in the vicinity of the mechanical stop is determined and the remaining time (26) for which the electric drive will run until the mechanical stop is reached is calculated and after the calculated remaining time (26) has expired the drive motor of the closing system is deactivated.

2. Method according to Claim 1, **characterized in that** the actual position of the mechanical stop is determined from one or more reference runs.

3. Method according to Claim 1, **characterized in that** the result for the remaining time (26) which is obtained from the calculation is combined with a supplementary factor which is dependent on the current measured position.

**4.** Method according to Claim 3, **characterized in that** the supplementary factor is varied as a function of system-related influencing variables.

**5.** Method according to Claims 3 or 4, **characterized in that** the immersion depth of a closing face into a mechanical stop which surrounds it can be adapted by means of the supplementary factor.

**6.** Method according to Claim 5, **characterized in that** the immersion depth is dependent on the system parameter of the motor voltage of the electric drive.

**7.** Method according to one or more of the preceding claims, **characterized in that**, after the first determination of the remaining time (26), the corresponding remaining time (26) is determined at each new position (25) and can be used for plausibility checking.

**8.** Method according to Claim 3, **characterized in that** the supplementary factor is determined empirically on the closing system or in reference runs into the mechanical stop for the closing face.

**Revendications**

**1.** Procédé permettant de déterminer le temps résiduel de fonctionnement d'un entraînement avant l'atteinte une butée, selon lequel, des surfaces à fermer au moyen de l'entraînement peuvent être mises dans des positions finales à délimitation mécanique, **caractérisé en ce qu'** après la saisie de la position de la surface à fermer par rapport à une butée mécanique, on détermine la différence de temps entre deux impulsions de codeur incrémental (25) à proximité de la butée mécanique, et on calcule le temps résiduel de fonctionnement (26) restant à l'entraînement électrique avant l'atteinte de la butée mécanique et, une fois que le temps résiduel de fonctionnement (26) calculé s'est écoulé, on arrête le moteur d'entraînement du système de fermeture.

**2.** Procédé selon la revendication 1, **caractérisé en ce que** la position effective de la butée mécanique est déterminée à partir d'une ou de plusieurs courses de référence.

**3.** Procédé selon la revendication 1, **caractérisé en ce que** le résultat du calcul concernant le temps résiduel de fonctionnement (26) est combiné à un facteur de surcharge qui est fonction de la position de mesure réelle.

**4.** Procédé selon la revendication 3, **caractérisé en ce qu'** on fait varier le facteur de surcharge en fonction de paramètres d'influence propres au système.

**5.** Procédé selon la revendication 3 ou 4, **caractérisé en ce que** le facteur de surcharge permet d'ajuster la profondeur d'insertion d'une surface de fermeture dans une butée mécanique qui entoure cette surface.

**6.** Procédé selon la revendication 5, **caractérisé en ce que** la profondeur d'insertion est fonction du paramètre du système que représente la tension du moteur du dispositif d'entraînement électrique.

**7.** Procédé selon une ou plusieurs des revendications précédentes, **caractérisé en ce que** après la première détermination du temps résiduel de fonctionnement (26), on peut, à chaque nouvelle position (25), déterminer le temps résiduel de fonctionnement (26) correspondant et l'utiliser pour vérification de plausibilité.

**8.** Procédé selon la revendication 3, **caractérisé en ce qu'** on détermine le facteur de surcharge de manière empirique au niveau du système de fermeture ou lors de courses de référence de la surface de fermeture dans la butée mécanique.

Fig.1

Fig.2

Fig.3